Europäisches Patentamt

European Patent Office

Office européen des brevets

(11) Numéro de publication: **0 091 706**
**B1**

(12) **FASCICULE DE BREVET EUROPEEN**

(45) Date de publication du fascicule du brevet: **01.04.87**

(51) Int. Cl.⁴: **C 08 L 27/06**

(21) Numéro de dépôt: **83200439.4**

(22) Date de dépôt: **29.03.83**

(54) **Compositions à base de polymères du chlorure de vinyle présentant une fumigénicité réduite.**

(30) Priorité: **08.04.82 FR 8206321**

(43) Date de publication de la demande:
**19.10.83 Bulletin 83/42**

(45) Mention de la délivrance du brevet:
**01.04.87 Bulletin 87/14**

(84) Etats contractants désignés:
**AT BE CH DE FR GB IT LI LU NL SE**

(56) Documents cités:
**FR-A-2 346 401**
**FR-A-2 465 764**

**CHEMICAL ABSTRACTS, vol. 92, no. 8, 25 février 1980, page 37, no. 59730r, Columbus, Ohio, USA**

(73) Titulaire: **SOLVAY & Cie (Société Anonyme)**
**Rue du Prince Albert, 33**
**B-1050 Bruxelles (BE)**

(72) Inventeur: **Hannecart, Etienne**
**Arboretumlaan, 38**
**B-1980 Tervueren (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# 0 091 706

**Description**

La présente invention concerne des compositions à base de polymères du chlorure de vinyle présentant une fumigénicité réduite comprenant un dérivé inorganique du bismuth à titre de réducteur de fumée.

Les polymères du chlorure de vinyle sont difficilement inflammables et auto-extinguibles. Il est cependant de pratique courante d'y incorporer, avant leur mise en oeuvre, des additifs retardateurs de flamme en vue d'améliorer encore leur résistance à l'inflammation. Néanmoins, les retardateurs de flamme sont généralement inaptes à empêcher totalement, à température élevée, la combustion des objets façonnés en polymères du chlorure de vinyle. Par ailleurs, la réduction de la fumigénicité, c'est-à-dire de l'aptitude à engendrer de la fumée par combustion, et le retard à l'inflammation d'une composition polymérique sont deux phénomènes différents qui n'ont pas de relation directe entre eux, à tel point que certains composés retardateurs de flamme agissent comme des générateurs de fumée, une fois que la combustion a effectivement commencé.

La fumée noire engendrée par la combustion d'objets façonnés à partir de compositions à base de polymères du chlorure de vinyle est actuellement considérée comme un inconvénient aussi grave que les flammes elles-mêmes, dans la mesure où elle rend plus difficile l'intervention des secours.

Dans le brevet FR—A—2 236 893 (Ferro Corporation), on préconise l'emploi de composés très divers de fer et de zinc pour réduire la fumigénicité des polymères du chlorure de vinyle. Bon nombre de ces composés de zinc et de fer conduisent à une réduction insignifiante de la fumigénicité des compositions rigides et sont donc d'application limitée, en pratique, aux compositions souples (plastifiées). De plus, bon nombre de ces composés sont fortement colorés ou induisent des colorations.

Dans le brevet BE—A—871 924 (The B. F. Goodrich Company), on préconise l'utilisation de certains sels inorganiques bien spécifiques du bismuth (borate, iodure, oxycarbonate et phosphate) ou du nickel ou encore de mélanges synergiques de certains dérivés inorganiques bien spécifiques du bismuth (borate, trioxyde, oxycarbonate et sulfure) avec certains dérivés bien spécifiques du nickel pour réduire la fumigénicité des compositions à base de polymères du chlorure de vinyle. On y divulgue aussi l'utilisation d'oxyde de bismuth seul en vue de démontrer l'effet de synergie découlant de l'utilisation conjointe d'oxyde de nickel. Ces sels inorganiques de bismuth et ces mélanges de dérivés inorganiques de bismuth et de nickel sont aptes à réduire la fumigénicité des compositions tant rigides que souples. Toutefois, les dérivés de nickel sont généralement fortement colorés et ils catalysent la photooxydation des polymères du chlorure de vinyle, de sorte que les mélanges de réducteurs de fumées qui en comprennent sont d'un intérêt pratique fort limité. Par ailleurs, l'efficacité des sels inorganiques et de l'oxyde de bismuth utilisés seuls est insuffisante.

La présente invention, telle qu'elle est caractérisée dans les revendications, a pour but de procurer des compositions à base de polymères du chlorure de vinyle présentant une fumigénicité réduite comprenant un dérivé inorganique de bismuth à titre de seul réducteur de fumée et qui ne présentent pas les inconvénients des compositions connues.

La fabrication d'hydroxyde de bismuth mis en oeuvre dans les compositions selon l'invention ne pose aucun problème particulier. On peut, par exemple, le fabriquer par précipitation à froid en faisant réagir un sel de bismuth, tel que le nitrate de bismuth, avec un alcali caustique, tel que l'hydroxyde de sodium.

En plus de l'hydroxyde de bismuth, les compositions selon l'invention peuvent contenir tous les additifs usuels des polymères du chlorure de vinyle, tels que des stabilisants thermiques, des lubrifiants, des plastifiants, des réducteurs de flamme, des charges etc. L'invention concerne donc aussi bien les compositions rigides que les compositions souples (plastifiées) à base de polymères du chlorure de vinyle.

La quantité d'hydroxyde de bismuth présente dans les compositions suivant l'invention peut varier dans une large mesure, notamment en fonction du résultat visé et de la nature et de la quantité des divers additifs entrant dans les compositions. Habituellement, on utilise l'hydroxyde de bismuth à raison de 1 à 10 parties en poids, exprimées en bismuth métallique, pour 100 parties de polymère du chlorure de vinyle. Dans les compositions rigides, c'est-à-dire celles exemptes de ou pauvres en plastifiant (en général, moins de 5% en poids par rapport au polymère) et conduisant à des objets façonnés rigides, on utilise avantageusement de 1 à 5 parties d'hydroxyde de bismuth, exprimées en bismuth métallique, pour 100 parties de polymère du chlorure de vinyle. Dans les compositions souples, c'est-à-dire celles contenant une quantité appréciable de plastifiant (en général, au moins 20% en poids par rapport au polymère) et conduisant à des objets façonnés souples, on l'utilise avantageusement à raison de 4,5 à 8,5 parties, exprimées en bismuth métallique, pour 100 parties de polymère du chlorure de vinyle.

Par polymère du chlorure de vinyle, on entend désigner tous les polymères contenant au moins 50% molaires, et de préférence au moins 70% molaires, d'unités monomériques dérivées du chlorure de vinyle. Les polymères du chlorure de vinyle qui conviennent à la réalisation des compositions selon l'invention comprennent donc aussi bien les homopolymères du chlorure de vinyle que ses copolymères contenant des unités monomériques dérivées d'un ou de plusieurs comonomères. Ces copolymères peuvent être des copolymères statistiques, des copolymères à blocs ou encore des copolymères greffés sur un tronc quelconque. A titre d'exemples de comonomères du chlorure de vinyle, on peut citer les oléfines telles que l'éthylène, le propylène et le styrène, les esters tels que l'acétate de vinyle et les acrylates et les méthacrylates d'alkyle, les dérivés vinylidéniques tels que le chlorure et le fluorure de vinylidène. De

2

préférence, les compositions suivant l'invention sont à base d'homopolymères du chlorure de vinyle. Le mode de fabrication des polymères du chlorure de vinyle mis en oeuvre peut être quelconque. On peut donc utiliser indifféremment pour la fabrication de compositions selon l'invention des polymères du chlorure de vinyle obtenus par polymérisation en masse, en phase gazeuse, en solution ou encore en émulsion ou en suspension aqueuses.

Pour préparer les compositions selon l'invention, l'hydroxyde de bismuth peut être mis en oeuvre sous n'importe quelle forme, celle d'une poudre ou d'une dispersion aqueuse par exemple. Cependant, pour des raisons de commodité, on préfère le mettre en oeuvre sous la forme d'une poudre. Dans ce cas, il est avantageux d'utiliser des poudres ayant une dimension de particules moyenne inférieure à environ 200 μm. De préférence, celle-ci est comprise entre environ 1 et 100 μm et plus particulièrement encore entre environ 1 et 50 μm.

La préparation des compositions selon l'invention ne présente pas de problème particulier, toutes les techniques habituelles de préparation de ces compositions pouvant être utilisées. Ainsi, on peut mélanger l'hydroxyde de bismuth avec le polymère du chlorure de vinyle dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Un mode opératoire particulièrement avantageux consiste à ajouter l'hydroxyde de bismuth au polymère du chlorure de vinyle se trouvant sous la forme d'une poudre lors de la fabrication d'un prémélange, en même temps que les autres additifs entrant dans la composition. On peut aussi introduire l'hydroxyde de bismuth directement dans les appareils où le polymère de chlorure de vinyle est fondu tels que les extrudeuses à vis.

Les compositions selon l'invention sont aptes à être mises en oeuvre par tous les procédés classiques de transformation des matières plastiques. Elles conviennent tout particulièrement pour la fabrication d'objets façonnés, tant souples que rigides, destinés à être utilisés dans des domaines d'application des polymères du chlorure de vinyle où une réduction notable de la fumigénicité des objets façonnés est intéressante, tels que les industries du batiment (tuyaux, gaines, châssis, volets, bardages de façades) et de l'ameublement (tapis et revêtements muraux).

Les exemples qui suivent illustrent l'invention. Les exemples 1, 2, 5 et 7, selon l'invention, illustrent des compositions contenant de l'hydroxyde de bismuth, $Bi(OH)_3$. Les exemples 3, 6 et 8, de comparaison, illustrent des compositions contenant du carbonate basique de bismuth, encore appelé oxycarbonate de bismuth, $Bi_2O_2CO_3$. Les exemples 4 et 9, de comparaison, illustrent des compositions contenant du trioxyde de bismuth, $Bi_2O_3$.

L'hydroxyde et le carbonate basique de bismuth sont des solides blancs alors que le trioxyde de bismuth est un solide jaunâtre.

L'hydroxyde, le carbonate basique et le trioxyde de bismuth utilisés se présentent sous la forme d'une poudre ayant une dimension moyenne des particules inférieure à 50 μm.

Dans les exemples 1 à 4, on a évalué des compositions rigides (formulation A). Dans les exemples 5 à 9, on a évalué des compositions souples (formulation B).

Les formulations A et B évaluées ont la composition suivante, les quantités étant exprimées en poids:

| Formulation A | |
|---|---|
| polychlorure de vinyle | 100 |
| phosphite dibasique de plomb | 2 |
| stéarate dibasique de plomb | 1,50 |
| stéarate de calcium | 0,50 |
| carbonate de calcium précipité | 10 |
| agent de mise en oeuvre | 1 |
| acide stéarique | 0,1 |
| oxyde de titane | 7 |
| dérivé de bismuth | voir Tableau I |

Formulation B

| | |
|---|---|
| polychlorure de vinyle | 100 |
| phtalate de di-éthylhexyle | 55 |
| sulfate tribasique de plomb | 3 |
| stéarate de calcium | 1 |
| carbonate de calcium naturel | 35 |
| dérivé de bismuth | voir Tableau I |

Les compositions rigides (exemples 1 à 4) ont été préparées par mélange de tous les ingrédients et malaxage du mélange à 160°C pendant 5 minutes, après quoi on a pressé des plaques par pressage du crêpe à 180°C pendant 1 minute sous une pression de 10 MPa.

Les compositions souples (exemples 5 à 9) ont été préparées par mélange de tous les ingrédients et malaxage du mélange à 150°C pendant 5 minutes, après quoi on a pressé des plaques par pressage du crêpe à 150°C pendant 1 minute sous une pression de 5,5 MPa.

On a également préparé, dans les mêmes conditions, des plaques à partir des formulations A et B, sans dérivé de bismuth.

L'évaluation de la fumigénicité a été effectuée, sur des éprouvettes découpées dans les plaques pressées, à 500°C, sous un débit d'air de 300 litres/heure, suivant la norme française enregistrée NF T51-073 de septembre 1977. Dans chacune des plaques pressées, on a découpé trois éprouvettes dont la masse a été choisie au cours d'un essai préliminaire pour que la densité optique maximale ne dépasse pas 2,5 au cours de l'essai de combustion. Toutes les éprouvettes correspondant à la formulation A (exemples 1 à 4 et la formulation A sans dérivé de bismuth) pesaient 470 mg. Toutes les éprouvettes correspondant à la formulation B (exemples 5 à 9 et la formulation B sans dérivé de bismuth) pesaient 244 mg.

Pour chacune des éprouvettes, on a enregistré la courbe de densité optique en fonction du temps. A partir de ces courbes, on a défini:

— l'unité conventionnelle de quantité de fumée U, à savoir, la quantité de fumée correspondant à une densité optique égale à 1 pendant une durée de 1 minute;
— la quantité totale de fumée émise au cours de l'essai, S, exprimée en unités conventionnelles.

A partir de ces données, on a calculé pour chacune des éprouvettes l'indice de fumée F, F étant égal à S/m, m étant la masse de l'éprouvette exprimée en g et on a fait la moyenne pour les trois éprouvettes.

L'abattement de fumée, exprimé en %, a ensuite été calculé suivant la formule:

$$\frac{F - F_0}{F_0} \times 100,$$

dans laquelle F=indice de fumée moyen de l'échantillon examiné $F_0$=indice de fumée moyen d'un échantillon de référence sans dérivé de bismuth. L'indice de fumée $F_0$ moyen de la formulation A (sans dérivé de bismuth) est de 5,07. L'indice de fumée moyen $F_0$ de la formulation B (sans dérivé de bismuth) est de 10,20.

Dans le Tableau I, en annexe, sont consignés la nature et la quantité de dérivé inorganique de bismuth utilisé, ainsi que l'abattement de fumée pour chaque composition.

0 091 706

TABLEAU I

| N° de l'exemple | Dérivé inorganique de bismuth | | | Formulation | Abattement de fumée, % |
|---|---|---|---|---|---|
| | Nature | Quantité | | | |
| | | en pcr* | en g de Bi/ 100 g de PVC | | |
| 1 | Bi(OH)$_3$ | 6 | 4,83 | A | 42 |
| 2 | Bi(OH)$_3$ | 10 | 8,05 | A | 55 |
| 3 | Bi$_2$O$_2$CO$_3$ | 10 | 8,05 | A | 46 |
| 4 | Bi$_2$O$_3$ | 10 | 8,95 | A | 47 |
| 5 | Bi(OH)$_3$ | 2 | 1,61 | B | 35 |
| 6 | Bi$_2$O$_2$CO$_3$ | 2 | 1,61 | B | 24 |
| 7 | Bi(OH)$_3$ | 6 | 4,83 | B | 67 |
| 8 | Bi$_2$O$_2$CO$_3$ | 6 | 4,83 | B | 39 |
| 9 | Bi$_2$O$_3$ | 6 | 5,37 | B | 42 |

\* parties en poids pour cent parties de résine

## Revendications

1. Compositions à base de polymères du chlorure de vinyle présentant une fumigénicité réduite comprenant un dérivé inorganique de bismuth à titre de seul réducteur de fumée, caractérisées en ce que le dérivé inorganique de bismuth est l'hydroxyde de bismuth.

2. Compositions selon la revendication 1, caractérisées en ce que l'hydroxyde de bismuth est utilisé à raison de 1 à 10 parties en poids, exprimées en bismuth métalliques, pour 100 parties de polymère du chlorure de vinyle.

3. Compositions selon la revendication 1 ou 2, caractérisées en ce qu'elles sont rigides et en ce que l'hydroxyde de bismuth est utilisé à raison de 1 à 5 parties en poids, exprimées en bismuth métallique, pour 100 parties de polymère du chlorure de vinyle.

4. Compositions selon la revendication 1 ou 2, caractérisées en ce qu'elles sont souples et en ce que l'hydroxyde de bismuth est utilisé à raison de 4,5 à 8,5 parties en poids, exprimées en bismuth métallique, pour 100 parties de polymère du chlorure de vinyle.

5. Compositions selon l'une quelconque des revendications 1 à 4, caractérisées en ce que le polymère du chlorure de vinyle est un homopolymère du chlorure de vinyle.

## Patentansprüche

1. Zusammensetzungen auf der Basis von Vinylchloridpolymeren, die eine reduzierte Rauchenwicklung aufweisen, enthaltend ein anorganisches Wismut-Derivat als einziges Rauch-Reduktionsmittel, dadurch gekennzeichnet, daß das anorganische Wismut-Derivat Wismuthydroxid ist.

2. Zusammensetzungen nach Anspruch 1, dadurch gekennzeichnet, daß das Wismuthydroxid zu 1 bis 10 Gewichtsteilen, ausgedrückt in metallischem Wismut, pro 100 Teile Vinylchloridpolymer verwendet ist.

3. Zusammensetzungen nach Anspruch 1 oder 2, dadurch gekennzeichnet, daß sie steif sind, und daß das Wismuthydroxid zu 1 bis 5 Gewichtsteilen, ausgedrückt in metallischem Wismut, pro 100 Teile Vinylchloridpolymer verwendet ist.

4. Zusammensetzungen nach Anspruch 1 oder 2, dadurch gekennzeichnet, daß sie biegsam sind, und daß das Wismuthydroxid zu 4,5 bis 8,5 Gew.-Teilen, ausgedrückt in metallischem Wismut, pro 100 Teile Vinylchloridpolymer verwendet ist.

5. Zusammensetzungen nach einem der Ansprüche 1 bis 4, dadurch gekennzeichnet, daß das Vinylchloridpolymer ein Vinylchlorid-Homopolymer ist.

## Claims

1. Compositions based on vinyl chloride polymers having a reduced ability to generate smoke,

5

comprising an inorganic bismuth derivative as the only smoke-reducing agent, characterized in that the inorganic bismuth derivative is bismuth hydroxide.

2. Compositions according to Claim 1, characterized in that bismuth hydroxide is used in a proportion of 1 to 10 parts by weight, expressed as metallic bismuth, per 100 parts of vinyl chloride polymer.

3. Compositions according to Claim 1 or 2, characterized in that they are rigid and in that bismuth hydroxide is used in a proportion of 1 to 5 parts by weight, expressed as metallic bismuth, per 100 parts of vinyl chloride polymer.

4. Compositions according to Claim 1 or 2, characterized in that they are flexible and in that bismuth hydroxide is used in a proportion of 4.5 to 8.5 parts by weight, expressed as metallic bismuth, per 100 parts of vinyl chloride polymer.

5. Compositions according to any one of Claims 1 to 4, characterized in that the vinyl chloride polymer is a vinyl chloride homopolymer.